# EUROPEAN PATENT APPLICATION

(11) **EP 2 461 196 A1**
(43) Date of publication of application: **06.06.2012**
(21) Application number: 11192162.3
(22) Date of filing: 06.12.2011
(51) Int. Cl.: G02B 6/44

(54) **Communication chassis**

(30) Priority: 06.12.2010 JP 2010271727
(71) Applicant: Hitachi, Ltd., Chiyoda-ku Tokyo 100-8280 (JP)
(72) Inventor: Obayashi, Seigo, Tokyo, 100-8220 (JP); Ogawa, Kenichi, Tokyo, 100-8220 (JP); Shibata, Atsushi, Tokyo, 100-8220 (JP)
(74) Representative: MERH-IP Matias Erny Reichl Hoffmann

(57) **Abstract**

An optical patch panel section (102,103) is made turnable in a double-door manner or in a single-door manner, whereby workability in coupling an optical fiber to an optical connector (113) is improved. Eventually, a compact design is provided. Owing to the compact design, a communication chassis (101) can be loaded in the same area in a rack as an area in which an optical transmission device is stored. Not only when a network is constructed but also when a channel is switched to another because a transmission line has to be relocated due to a change in the route of the transmission line occurring after the network is constructed, or when the quality of the transmission line is varied, light level adjustment work or light dispersion adjustment work can be easily achieved from one place on the front side of the chassis (101).

## Description

### BACKGROUND OF THE INVENTION

### 1. Field of the Invention

The present invention relates to a communication chassis, or more particularly, to a communication chassis such as an optical fiber patch panel or compact patch panel to be employed in an optical communication system.

### 2. Description of the Related Art

For optical transmission devices that form an optical network in the field of an optical communication system, it is necessary to lead an optical fiber. Further, an area that is wide enough to handle the surplus length of the optical fiber led to the optical transmission device while ensuring a bend radius specified for the optical fiber is needed. In addition, introduction of a device that utilizes wavelength division multiplexing (WDM) has advanced, and the number of optical fibers to be led has increased. In optical wavelength multiplexing, it is necessary to adjust a light level over a transmission line or adjust light dispersion in units of a zone of the transmission line. An optical attenuator for light level adjustment or a fiber for light dispersion compensation has to be adjusted or mounted according to the characteristics of the route of the transmission line.

Conventionally, a light level adjustment optical attenuator is often mounted in a patch panel interposed between an optical transmission line and optical transmission device. This is because when the light level adjustment attenuator is mounted in the optical transmission device, many restrictions are imposed on mounting in order to ensure maneuverability required for high-density mounting or to avoid interference with the front door of a rack in which the optical transmission device is loaded. In addition, the patch panel acts as a relay node via which the optical transmission line and optical transmission device are connected to each other, the patch panel is not always located in the vicinity of the optical transmission device. Further, the patch panel is requested to offer a wide manipulation area for fear work of inserting or removing an optical fiber may be hindered. There is difficulty in preserving a mounting area. As mentioned above, efficiency in light level adjustment work, which is required when a network is constructed or which is derived from a change in the route of a transmission line, is not always satisfactory because measurement of the light level has to be performed in both the optical transmission device and patch panel whose installation sites are different from each other.

Japanese Patent Application Laid-Open Publication No. 2008-65141 has proposed a structure making it possible to dispose a patch panel in the vicinity of an optical transmission device for the purpose of improving work efficiency.

### SUMMARY OF THE INVENTION

As mentioned above, conventionally, light level adjustment work, which is performed when a network is constructed or when a transmission line has to be relocated due to a change in the route of the transmission line, and accompanying optical-fiber leading work have to be performed separately on an optical transmission device and patch panel. In the patch panel, coupling work has to be performed on both sides thereof, that is, the front side of the patch panel and the rear side thereof. This may invite degradation in work efficiency. In addition, even from the viewpoint of preventing erroneous removal of a fiber in use, the patch panel is requested to be large in size in order to offer a satisfactory manipulation area and permit easy access to an optical connector.

In addition, the structure described in Japanese Patent Application Laid-Open Publication No. 2008-65141 suffers from a problem that light level adjustment work to be required at the time of constructing a network has to be performed on each of the front side and rear side of an optical transmission device, and a problem that since an optical-fiber surplus length handling section is disposed at a fixed position in a depth direction, a large mounting area is needed to ensure maneuverability.

Accordingly, an object of the present invention is to provide a compact communication chassis such as a patch panel making it possible to easily perform optical-fiber leading work and light level adjustment work from the front side thereof. More particularly, an object of the present invention is to provide a compact patch panel that has a panel section, on which plural optical connectors to which optical fibers are coupled are mounted, and a surplus length handling section structured to open in a double-door manner, that makes it easy to perform light level adjustment or dispersion adjustment, which is required at the time of construction or at the time of relocating a transmission line, from the front side of the panel.

Another object of the present invention is to make it possible to easily perform light level adjustment work or light dispersion adjustment work from one place on the front side of an optical transmission device not only when a network is constructed but also when a channel is switched to another because a transmission line has to be relocated due to a change in the route of the transmission line or when the quality of the transmission line is varied. Still another object of the present invention is to realize a compact design by resolving the aforesaid restrictions on mounting, and making it possible to mount a light level adjustment optical attenuator or a light dispersion compensation fiber in the inside of a communication chassis such as a patch panel. Further, still another object of the present invention is to make it possible to smoothly change a route of a transmission line, and to easily and reliably perform light level adjustment at the time of relocating the transmission line.

According to an aspect of the present invention, there is provided a compact optical patch panel that has a side of a panel section, on which plural relay optical connectors are mounted, secured by a strut in order to make it possible to couple an optical fiber to the relay optical connector from the front side of the panel so as to thus improve workability, and that has the panel section and a surplus length handling section opened in a double-door manner.

As a structure that permits easy access from the front side of the patch panel, optical connectors via which an optical transmission line and optical transmission device are connected to each other are mounted on the front side of an optical patch panel section, and the optical patch panel section and an optical-fiber surplus length handling section are made turnable in a double-door manner. Thus, both the front and rear sides of the optical connectors mounted on the optical patch panel section can be easily accessed on the front side of the patch panel. Since the patch panel section and optical-fiber surplus length handling section are turnable in the double-door manner, even when the necessity of adjusting a light level arises due to construction of a network or a change in the route of a transmission line, an optical attenuator can be placed inward the optical patch panel section. No restriction has to be imposed on a storage area but necessary adjustment can be achieved. Further, when a dispersion compensation fiber is placed in a deep area inward the patch panel section, light dispersion adjustment can be easily achieved from the front side of the patch panel. Further, when the optical-fiber surplus length handling section is made turnable together with the patch panel section, a bend radius specified for an optical fiber can be readily ensured. In addition, a route along which an optical fiber is led from the transmission line or optical transmission device is ensured at a fulcrum of a double-door structure, and leading of the optical fiber is restricted by a structure that ensures the specified bend radius. Thus, the optical fiber is prevented from being led with a radius, which is equal to or smaller than the specified bend radius, at the time of constructing a new network or at the time of opening or closing the optical patch panel section. According to a first solution of the present invention, there is provided a communication chassis including:
a panel section that includes a plurality of connectors via which a transmission line and a transmission device are connected to each other, a wiring orifice through which a wire is led into the inside of the chassis, and a strut on which the panel section is borne by the chassis, and that is structured to open forward in a double-door manner with the strut as a center;
a front-side surplus length handling section that is mounted on the front side of the panel section and formed as an integral structure together with the panel section, and that is used to handle a surplus length of a wire; and/or
a rear-side surplus length handling section that is mounted on the rear side of the panel section and formed as the integral structure together with the panel section, and that is used to handle a surplus length of a wire led into the inside of the chassis through the wiring orifice.

The panel section, the front-side surplus length handling section, and the rear-side surplus length handling section can be disposed on each of the left and right sides of the face of the chassis. When the panel section is opened or closed, the front-side surplus length handling section and the rear-side surplus length handling section can be turned together with the panel section in the double-door manner with the strut as a center.

According to an alternative solution of the present invention, there is provided a communication chassis including:
a panel section that includes a plurality of connectors via which a transmission line and a transmission device are connected to each other, a wiring orifice through which a wire is led into the inside of the chassis, and a strut on which the panel section is borne by the chassis, and that is structured to open forward in a single-swing door manner with the strut as a center;
a front-side surplus length handling section that is mounted on the front side of the panel section and formed as an integral structure together with the panel section, and that is used to handle a surplus length of a wire; and/or
a rear-side surplus length handling section that is mounted on the rear side of the panel section and formed as an integral structure together with the panel section, and that is used to handle a surplus length of a wire led into the inside of the chassis through the wiring orifice.

The panel section, front-side surplus length handling section, and rear-side surplus length handling section can be disposed on only one of the left and right sides of the face of the chassis. When the panel section is opened or closed, the front-side surplus length handling section and rear-side surplus length handling section can be turned in the single-swing door manner together with the panel section with the strut as a center.

According to the present invention, a communication chassis such as a patch panel is made turnable, and designed to be compact by ensuring workability in working on an optical connector. According to the present invention, especially, an optical patch panel section is made turnable in a double-door/or single-swing door manner, whereby workability in coupling an optical fiber to the optical connector is improved. Eventually, the compact design can be provided.

According to the present invention, owing to the compact design, a communication chassis can be mounted in the same area in a rack as an area in which an optical transmission device is stored. Not only when a network is constructed but also when one channel is switched to another because a transmission line has to be relocated due to a change in the route of the transmission line occurring after the network is constructed or when the quality of the transmission line is varied, light level adjustment work or light dispersion adjustment work can be easily achieved from one place on the front side of the communication chassis. In addition, according to the present invention, since an optical attenuator for light level adjustment or a fiber for light dispersion compensation can be mounted in the inside of the communication chassis such as a patch panel, no restriction is imposed on mounting. Further, according to the present invention, the route of a transmission line can be smoothly changed, and light level adjustment required when the transmission line has to be relocated can be easily and reliably achieved.

### BRIEF DESCRIPTION OF THE DRAWINGS

The present invention will become fully understood from the detailed description given hereinafter and the accompanying drawings, wherein:
Fig. 1 is a diagram showing the appearance of optical patch panel sections;
Fig. 2 is a diagram showing the appearance of the optical patch panel sections;
Fig. 3 is a diagram showing a mechanism that limits an angle by which the optical panel sections can be opened or closed;
Fig. 4 is a diagram showing an example of leading of optical cables to the optical patch panel sections;
Fig. 5 is a front view showing the optical patch panel sections;
Fig. 6 is a top view showing the optical patch panel sections; and

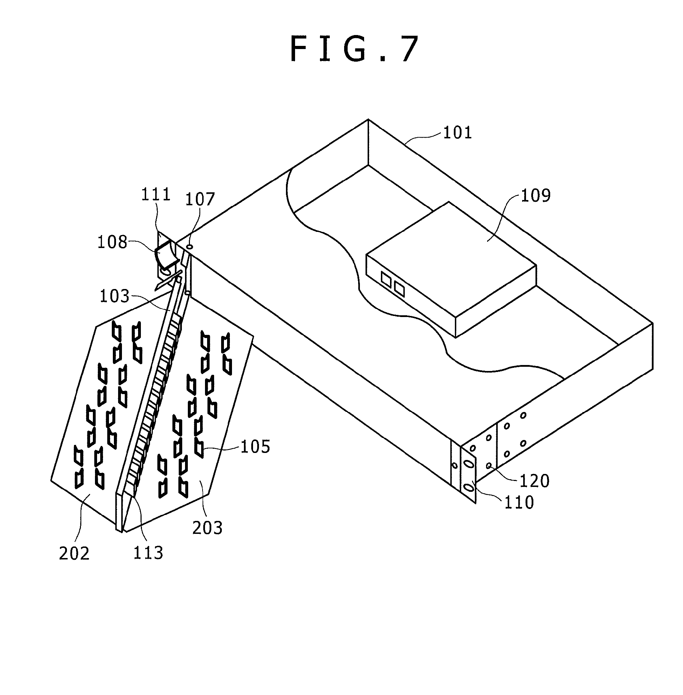

Fig. 7 is a diagram showing the appearance of an optical patch panel section included in a second embodiment.

### DESCRIPTION OF THE PREFERRED EMBODIMENTS

Referring to the drawings, embodiments of the present invention will be described below.

### 1. First Embodiment (bilateral double-door turnable type)

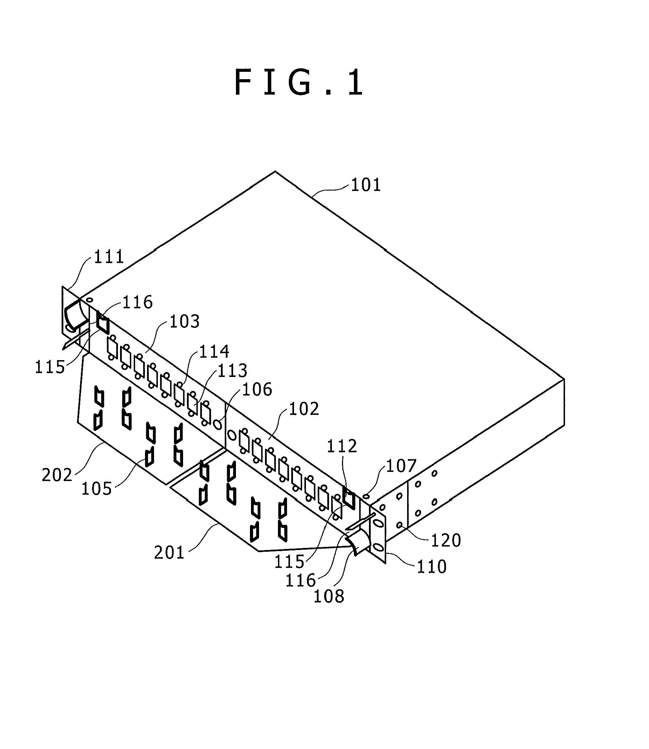

Fig. 1 is a diagram showing the appearance of optical patch panel sections.

Fig. 1 shows a communication chassis 101 including optical patch panel sections 102 and 103. The face of the communication chassis 101 is provided with the optical patch panel sections 102 and 103 on which plural optical connectors 113 via which an optical transmission line and optical transmission device are connected with each other over an optical fiber are mounted, and surplus length handling sections 201 and 202 for use in handling a surplus length of a led optical fiber. Further, the chassis 101 is provided with L-shaped fixtures 110 and 111 for attachment to a rack so that the chassis can be loaded in the rack.

The optical patch panel sections 102 and 103 are borne by the chassis 101 on struts 107, and structured to open forward in a double-door manner with the struts 107 as centers. The optical connectors 113 are fixed to the optical patch panel sections 102 and 103 by tightening screws 114 and thus mounted on the optical patch panel sections 102 and 103. Therefore, by removing the screw 114, the optical connector 113 can be easily replaced with an optical connector that fits the type of connector of an optical fiber to be led. Further, by tightly fitting a thumbscrew 106 into a chassis screw hole (not shown), the open state of each of the optical patch panel sections 102 and 103 is secured. A wiring orifice 112 through which an optical fiber led out from an optical transmission line or an optical transmission device is led into the inside of the chassis 101 is formed in each of the optical patch panel sections 102 and 103. An optical clamp 115 is disposed on the orifice 112 in order to prevent the led optical fiber from popping out of the orifice 112. Even when the optical patch panel section 102 or 103 is opened, the optical fiber is prevented from being sandwiched between the optical patch panel section 102 or 103 and the chassis 101.

The surplus length handling sections 201 and 202 making it possible to handle the surplus length of a led optical fiber are mounted on the front sides of the optical patch panel sections 102 and 103 respectively. Optical clamps 105 are cruciformly disposed in fours in order to cope with the surplus length of the led optical fiber. Thus, a bend radius specified for the optical fiber is satisfied.

In the vicinity of the strut 107 on which each of the optical patch panel sections 102 and 103 is borne, an arc structural part 108 for ensuring a bend radius specified for an optical fiber is fixed to each of the optical patch panel sections 102 and 103 in such a manner that the arc structural part 108 faces outward. Owing to the arc structural part 108, work of leading an optical fiber, which is coupled from a transmission line or an optical transmission device to the optical patch panel section 102 or 103 at the time of newly constructing a network, can be easily achieved with the bend radius, which is specified for the optical fiber, ensured. In addition, an optical clamp 116 is attached to the base of the arc structural part 108 fixed to the strut 107, whereby an optical fiber is led out with the strut 107 of the optical patch panel section 102 or 103 as an origin. Eventually, when the optical patch panel section 102 or 103 is opened or closed, the optical fiber is prevented from being highly tensed or being led with a bend radius equal to or smaller than the specified bend radius.

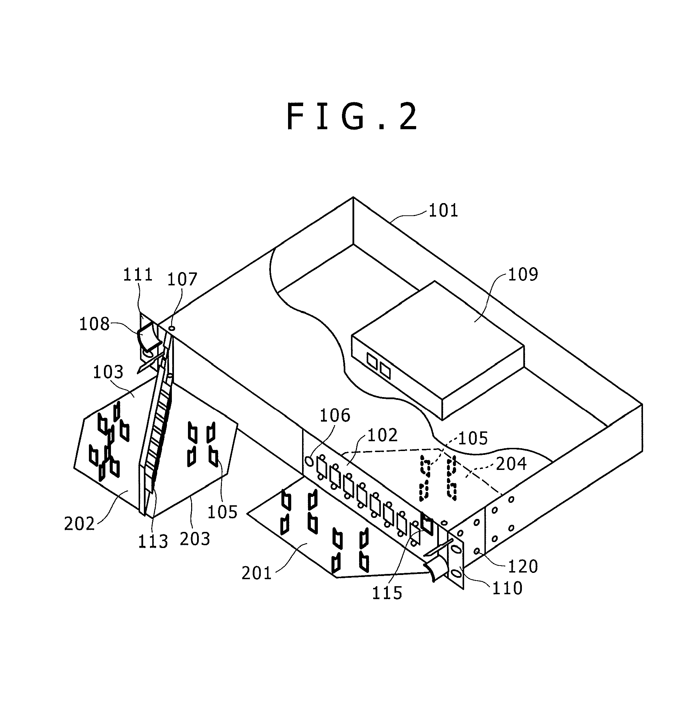

Fig. 2 is a diagram showing the appearance of the optical patch panel sections with the left optical patch panel section left open.

In Fig. 2, surplus length handling sections 203 and 204 for use in handling the surplus length of an optical fiber led into the inside of the chassis 101 through the wiring orifice 112 formed in the upper part of each of the optical patch panel sections 102 and 103 are formed inward the optical patch panel sections 102 and 103 respectively on which the optical connectors 113 via which an optical transmission line and optical transmission device are connected with each other over an optical fiber are mounted. Inside the chassis 101, an area in which a chassis 109 in which a light dispersion compensation fiber is stored can be placed is preserved. Therefore, not only when a network is constructed but also when a channel is switched to another because a transmission line has to be relocated due to a change in the route of the transmission line occurring after the network is constructed or when the quality of the transmission line is varied, light dispersion adjustment can be achieved from one place on the front side of the chassis. The light dispersion compensation fiber chassis 109 can be slid out of the front side of the chassis 101 and can thus be replaced with another. Thus, the optimal light dispersion compensation fiber chassis 109 that fits with the characteristics of a transmission line can be used and adjustment work can therefore be easily achieved according to the characteristics of the optical transmission line.

The optical patch panel sections 102 and 103 are structured to open in a double-door manner with the struts 107 as centers. By loosening the thumbscrews 106, the optical patch panel sections 102 and 103 are bilaterally opened in the double-door manner. An optical fiber to be coupled to the internal side of the patch panel section can be easily coupled from the front side of the chassis. Since the optical patch panel sections are opened in the double-door manner, a manipulation of coupling an optical fiber to the optical patch panel section 102 or 103 can be performed in front of the communication chassis 101. This obviates the necessity of widely preserving a manipulation area, in which an optical fiber is manipulated or led, in the communication chassis 101. A compact design can be realized through high-density mounting.

The surplus length handling sections 203 and 204 for handling the surplus length of a led optical fiber are formed as integral structures together with the optical patch panel sections 102 and 103 respectively. Therefore, when the optical patch panel sections 102 and 103 are opened or closed, the surplus length handling sections 203 and 204 are turned with the struts 107 as centers by tracing the same trajectories as the optical patch panel sections 102 and 103 do. Therefore, when the optical patch panel sections 102 and 103 are opened or closed, a led optical fiber is prevented from being highly tensed or being bent with only a radius, which is equal to or smaller than a specified value, left. The surplus length handling sections 203 and 204 are mounted on the rear sides of the optical patch panel sections 102 and 103 respectively. On the surplus length handling sections 203 and 204, the optical clamps 105 are cruciformly disposed in fours in order to cope with the surplus length of a led optical fiber. Thus, the bend radius specified for the optical fiber can be satisfied. The surplus length handling sections 203 and 204 are structured to be trapezoidal for fear when the optical panel panel sections 102 and 103 are opened or closed, the left and right surplus length handling sections may interfere with each other. The surplus length handling sections 201 and 202 are also structured to be trapezoidal so that when the optical patch panel sections 102 and 103 are opened or closed, the surplus length handling sections 201 and 202 can be prevented from interfering with a rack in which the communication chassis is loaded. In order to further prevent the surplus length handling sections 201 and 202 form interfering with the rack, a mechanism is included for limiting an opening angle at which the optical patch panel sections 102 and 103 are opened.

Incidentally, the shape of the surplus length handling sections is not limited to the trapezoid, but an arc shape, a semicircular shape, or any other shape capable of avoiding interference can be adopted.

The number of optical clamps 105 and the deposition thereof may be determined appropriately. Further, instead of the optical clamps 105, any appropriate structure making it possible to satisfy a bend radius specified for an optical fiber may be adopted. The optical clamps 105 may be excluded.

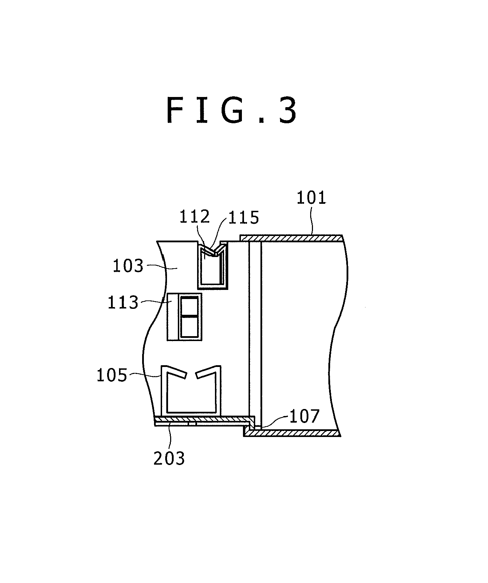

Fig. 3 is a diagram laterally showing a mechanism for limiting an opening angle of the optical patch panel sections.

In Fig. 3, the lower part of the face of the optical patch panel chassis 101 is folded upward in an L-shaped manner. The innermost parts of the surplus length handling sections 203 and 204 formed as integral structures together with the respective optical patch panel sections 102 and 103 are folded downward in the L-shaped manner. Therefore, when the optical patch panel sections 102 and 103 are opened in a double-door manner, the parts of the surplus length handling sections 203 and 204, which are folded downward in the L-shaped manner, interfere with the lower part of the face of the optical patch panel chassis 101 which is folded upward in the L-shaped manner. The angle of the optical patch panel sections opened in the double-door manner is thus limited for fear the optical patch panel sections may be opened more widely. Owing to this mechanism, when the optical patch panel section 102 or 103 is opened, a led optical fiber can be prevented from being sandwiched between the optical patch panel section 102 or 103 and a rack in which the chassis 101 is loaded.

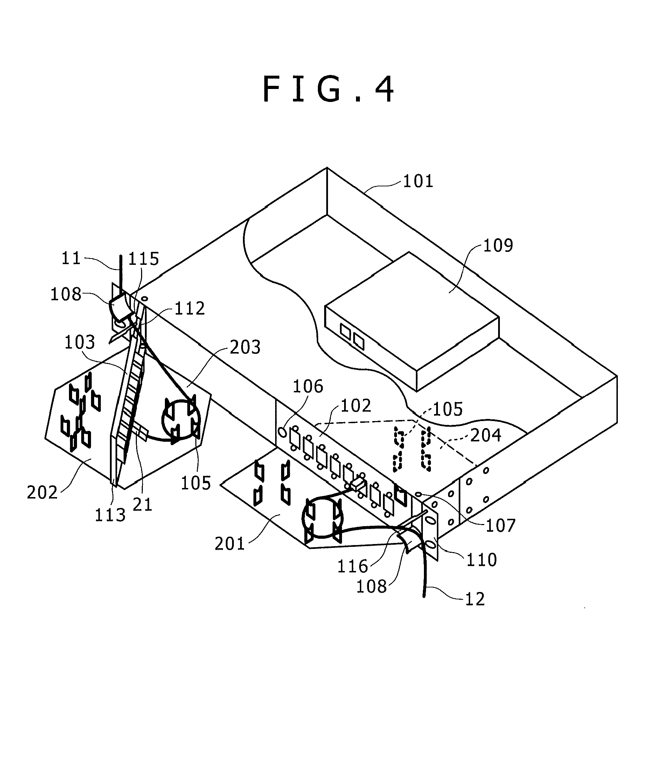

Fig. 4 shows an example of a route along which an optical fiber is led to the optical patch panel section.

In Fig. 4, an optical fiber 11 or 12 to be led from an optical transmission line or optical transmission device is led along the arc structural part 108 with a bend radius, which is specified for the optical fiber 11 or 12, ensured. Thereafter, the optical fiber 11 or 12 passes the optical clamp 116 located near the strut 107. The optical fiber 12 to be coupled to the front side of the optical connector 113 mounted on the optical patch panel section 102 has the surplus length thereof handled using the optical clamps 105, which are mounted on the surplus length handling section 201 on the front side of the optical patch panel 102, with the bend radius, which is specified for the optical fiber 12, ensured. Thereafter, the optical fiber 12 is coupled to the optical connector 113 from the front side of the optical connector.

On the other hand, as for the optical fiber 11 to be coupled to the rear side of the optical connector 113 mounted on the optical patch panel section 103, work is performed by opening the optical patch panel section 103 in order to improve the efficiency in leading and coupling the optical fiber. The optical fiber 11 has to be led into the inside of the chassis 101 because it is coupled to the rear side of the optical connector 113. The optical fiber 11 is led into the rear side of the optical patch panel section 103 via the optical clamp 115 on the wiring orifice 112 formed in the upper part of the optical patch panel section 103. Thereafter, the optical clamps 105 mounted on the surplus length handling section 203 on the rear side of the optical patch panel section 103 are used to handle the surplus length of the optical fiber 11 with the bend radius, which is specified for the optical fiber 11, ensured. Thereafter, the optical fiber 11 is coupled to the optical connector 113 from the rear side of the optical connector.

When a network is newly constructed, when a channel is switched to another because a transmission line has to be relocated due to a change in the route of the transmission line occurring after the network is constructed, when the quality of the transmission line is varied, or when a light level is adjusted, the light level adjustment optical attenuator 21 can be interposed between the optical connector 113 and optical fiber 11 on the rear side of the optical connector 113 mounted on the optical patch panel section 103. Therefore, even when the light level has to be readjusted due to the change in the route of the transmission line occurring after the network is constructed, once the optical attenuator 21 is set to an optimal value, work can be easily achieved from the front side of the chassis. Eventually, work efficiency is improved. Likewise, when a light dispersion value has to be adjusted, once the light dispersion compensation fiber 109 capable of being placed in the chassis 101 is laid down, the adjustment work can be easily achieved.

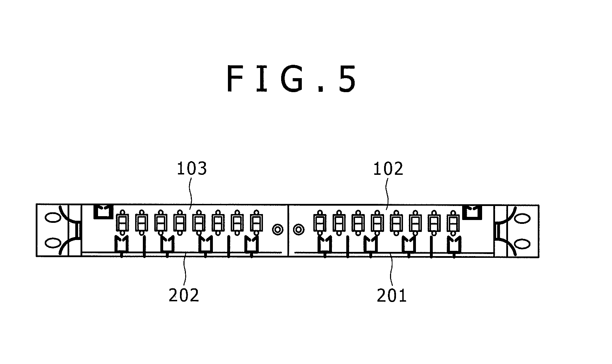

Fig. 5 is a front view of the optical patch panel sections.

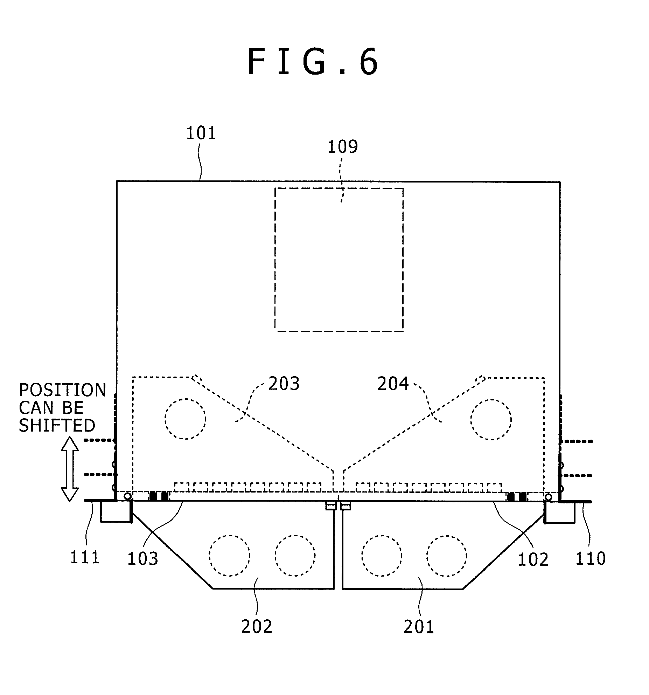

Fig. 6 is a top view of the optical patch panel sections.

Referring to Fig. 6, the chassis 101 is provided with the rack attachment L-shaped fixtures 110 and 111 that make it possible to load the chassis in a rack. The rack attachment L-shaped fixtures 110 and 111 are each fixed to the chassis 101 at four positions using screws 120. Screw holes are threaded in the chassis 101 so that the positions at which the rack attachment L-shaped fixtures 110 and 111 are located can be shifted in a depth direction in line with the shape of the rack. By removing the screws 120 according to the shape of the rack, the positions at which the rack attachment L-shaped fixtures 110 and 111 are located are shifted. Thus, the rack in which the chassis is loaded need not be fixed to any specific type, but the chassis 1 can be loaded in an arbitrary place.

Therefore, when the optical patch panel sections 102 and 103 are made turnable in a double-door manner according to the present embodiment, workability in coupling the optical fibers 11 and 12 to the optical connectors 113 is improved, and a compact design can be attained. Owing to the compact design, the chassis can be loaded in the same area in a rack as an area in which an optical transmission device is stored. Not only when a network is constructed but also when a channel is switched to another because a transmission line has to be relocated due to a change in the route of the transmission line occurring after the network is constructed or when the quality of the transmission line is varied, work of adjusting a light level or light dispersion can be achieved from one place on the front side of the chassis. In addition, since the light level adjustment optical attenuator 21 or light dispersion compensation fiber 109 can be placed inward the optical patch panel sections 102 and 103, no restriction is imposed on mounting. Therefore, the route of a transmission line can be smoothly changed. The light level adjustment required when the transmission line has to be relocated can be easily and reliably achieved.

### 2. Second Embodiment (single-swing door turnable type)

In the first embodiment, the optical patch panel sections 102 and 103 are structured to be bilaterally turnable in a double-door manner. A second embodiment of the present invention includes only the optical patch panel section 103 that opens in a single-swing door manner. In this example, a left-hand optical patch panel section that opens in the single-swing door manner is included. Alternatively, a right-hand optical patch panel may be included. In the second embodiment, the same reference numerals as those in the first embodiment denote identical components. Even the second embodiment exerts the same operation and advantage as the first embodiment does.

A patch panel for use in coupling optical fibers has been described so far. However, the present invention is not limited to the optical fibers but may be applied to appropriate wires. In this case, an optical patch panel chassis, optical patch panel sections, optical clamps, a light dispersion compensation fiber chassis, optical connectors, and an optical attenuator can be replaced with a patch panel chassis, patch panel sections, clamps, a dispersion compensation fiber chassis, connectors, and an attenuator.

## Claims

1. A communication chassis comprising:
a panel section (102, 103) that includes a plurality of connectors (113) via which a transmission line and a transmission device are connected to each other, a wiring orifice (112) through which a wire is led into the inside of the chassis (101), and a strut (107) for holding the panel section (102, 103);
a front-side surplus length handling section (201, 202) that is mounted on the front side of the panel section and formed as an integral structure together with the panel section (102, 103), the front-side surplus length handling section (201, 202) being used to handle the surplus length of a wire; and
a rear-side surplus length handling section (203, 204) that is mounted on the rear side of the panel section (102, 103) and formed as the integral structure together with the panel section (102, 103), the rear-side surplus length handling section being used to handle the surplus length of a wire led into the inside of the chassis (101) through the wiring orifice, wherein
when the panel section (102, 103) is opened, the front-side surplus length handling section (201, 202) and the rear-side surplus length handling section (203, 204) are turned together with the panel section with the strut (107) as a center.

2. The communication chassis according to claim 1, wherein the panel section (102, 103) being structured to open forward in a double-door manner with the strut (107) as a center.

3. The communication chassis according to claim 1 or 2,
wherein
the panel section (102, 103), the front-side surplus length handling section (201, 202), and the rear-side surplus length handling section (203, 204) are disposed on each of the left and right sides of the face of the chassis (101).

4. The communication chassis according to claim 1, wherein the panel section (102, 103) being structured to open forward in a single-swing door manner with the strut (107) as a center.

5. The communication chassis according to claim 1, 4 or 15, wherein the panel section (102, 103), the front-side surplus length handling section (201, 202), and the rear-side surplus length handling section (203, 204) are disposed on only one of the left and right sides of the face of the chassis (101).

6. The communication chassis according to at least one of claims 1 to 5 or according to claim 15, wherein when the panel section (102, 103) is opened, the front-side surplus length handling section (201, 202) and the rear-side surplus length handling section (203, 204) are turned in the double-door manner or in the single-swing door manner together with the panel section (102, 103) with the strut (107) as a center.

7. The communication chassis according to at least one of claims 1 to 6 or according to claim 15, wherein the front-side surplus length handling section (201, 202) and/or rear-side surplus length handling section (203, 204) further includes clamps (105) that are used to handle the surplus length of a wire on the front or rear side of the panel section (201-204) with a bend radius, which is specified for the wire, ensured, the clamps (105) thus permitting storage of the wire.

8. The communication chassis according to any of claims 1 to 7 or according to claim 15, further comprising an arc structural part (108) that makes it possible to lead a wire from another device with a bend radius, which is specified for the wire, ensured, the arc structural part (108) being disposed in the vicinity of the strut (107).

9. The communication chassis according to any of claims 1 to 8 or according to claim 15, further comprising a mechanism that includes the lower part of the face of the chassis (101) and the edge in a rear direction of the rear-side surplus length handling section (203, 204), the mechanism allowing the panel section (102, 103) to stand still at a predetermined turning angle.

10. The communication chassis according to any of claims 1 to 9 or according to claim 15, further comprising an area inside the chassis (101) in which a level adjustment attenuator (21), a dispersion compensation wire, a chassis in which the dispersion compensation wire is stored, and/or any other part can be placed.

11. The communication chassis according to any of claims 1 to 10 or according to claim 15, wherein when the level adjustment attenuator (21) is used, the attenuator (21) can be interposed between the connector (113) and wire on the rear side of the connector (113) on the panel section (102, 103).

12. The communication chassis according to any of claims 1 to 11 or according to claim 15, further comprising a clamp (115) located on the wiring orifice (112).

13. The communication chassis according to any of claims 1 to 12 or according to claim 15, further comprising a clamp located near the arc structural part (108).

14. The communication chassis according to any of claims 1 to 13 or according to claim 15, wherein the front-side surplus length handling section and/or rear-side surplus length handling section (201-204) is shaped in such a manner that when the panel section (102, 103) is opened or closed, the left and right front-side surplus length handling sections (201, 202) and/or left and right rear-side surplus length handling sections (203, 204) do not interfere with each other.

15. A communication chassis comprising:
a panel section (102, 103) that includes a plurality of connectors (113) via which a transmission line and a transmission device are connected to each other, a wiring orifice through which a wire is led into the inside of the chassis (101), and a strut (107) on which the panel section (102, 103) is borne by the chassis (101), the panel section (102, 103) being structured to open forward in a single-swing door manner with the strut (107) as a center;
a front-side surplus length handling section (201, 202) that is mounted on the front side of the panel section and formed as an integral structure together with the panel section (102, 103), the front-side surplus length handling section (201, 202) being used to handle the surplus length of a wire; and
a rear-side surplus length handling section (203, 204) that is mounted on the rear side of the panel section and formed as the integral structure together with the panel section (102, 103), the rear-side surplus length handling section (203, 204) being used to handle the surplus length of a wire led into the inside of the chassis (101) through the wiring orifice,
when the panel section (102, 103) is opened, the front-side surplus length handling section (201, 202) and the rear-side surplus length handling section (203, 204) are turned in the single-swing door manner together with the panel section (102, 103) with the strut (107) as a center.
